(19) **Europäisches Patentamt / European Patent Office / Office européen des brevets**

(11) **EP 2 400 809 A1**

(12) **EUROPEAN PATENT APPLICATION**
published in accordance with Art. 153(4) EPC

(43) Date of publication:
**28.12.2011 Bulletin 2011/52**

(21) Application number: **10743702.2**

(22) Date of filing: **15.02.2010**

(51) Int Cl.:
**H04W 72/12** (2009.01)    **H04W 72/10** (2009.01)

(86) International application number:
**PCT/JP2010/052138**

(87) International publication number:
**WO 2010/095576 (26.08.2010 Gazette 2010/34)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **17.02.2009 JP 2009034217**

(71) Applicant: **NTT DOCOMO, INC.**
**Chiyoda-ku**
**Tokyo 100-6150 (JP)**

(72) Inventors:
• **HAYASHI, Takahiro**
**Tokyo 100-6150 (JP)**

• **YASUDA, Yoshiyuki**
**Tokyo 100-6150 (JP)**
• **HANAKI, Akihito**
**Tokyo 100-6150 (JP)**
• **GOTO, Yoshikazu**
**Tokyo 100-6150 (JP)**
• **ISHII, Hiroyuki**
**Tokyo 100-6150 (JP)**

(74) Representative: **HOFFMANN EITLE**
**Patent- und Rechtsanwälte**
**Arabellastraße 4**
**81925 München (DE)**

(54) **WIRELESS COMMUNICATION SYSTEM, RADIO BASE STATION AND WIRELESS COMMUNICATION METHOD**

(57) A mobile communication system comprises: a data amount measurement unit (224) configured to measure an actual usage record of the first call type during execution of the first call type after starting the first call type; and MAC processing unit (222) configured to set a scheduling order of the first call type based on the actual usage record of the first call type, during execution of the first call type.

FIG. 4

EP 2 400 809 A1

**Description**

TECHNICAL FIELD

The present invention relates to a radio communication system, a radio base station, and a radio communication method for providing a first call type to which radio resources are allocated in a time division manner.

BACKGROUND ART

There has heretofore been known a technique for controlling allocation of radio resources based on a priority class (for example, "priority class") set for each call. Generally, the priority class of the call is fixedly set depending on a contract type or the like.

For example, for a call type to which the radio resources are allocated in a time division manner (hereinafter, a first call type), the control of allocating the radio resources is to control the order (scheduling priorities) of allocating the radio resources (such as time slots or frequencies) to the calls. The first call type includes calls for HSDPA (High Speed Downlink Packet Access) and a HSUPA (High Speed Uplink Packet Access), for example.

In the meantime, for a call type to which the radio resources are allocated depending on a transmission rate (hereinafter, a second call type), the control of allocating the radio resources is to control the transmission rate (an allocated transmission rate) which varies depending on the allocation of the radio resources. The second call type is a call for R99 (Release 99), for example.

Here, an upper node such as a radio network controller or an exchange notifies a radio base station of the priority class of a call.

Specifically, in a W-CDMA/UTMS system standardized by the 3GPP (3rd Generation Partnership Project), the priority class of a call can be notified by using "Allocation/Retention Priority Level" as a signal format for notification sent from the exchange to the radio network controller (see Non-Patent Document 1, for example). Meanwhile, the priority class of the call can be notified by using "MAC-hs Scheduling Priority Indicator" as a signal format sent from the radio network controller to the radio base station (see Non-Patent Document 2, for example).

PRIOR ART DOCUMENTS

NON-PATENT DOCUMENTS

Non-Patent Document 1: TS25.413 V7.9.0 "UTRAN Iu interface RANAP signalling"
Non-Patent Document 2: TS25.433 V8.1.0 "UTRAN Iub interface Node B Application Part (NBAP) signalling"

SUMMARY OF THE INVENTION

PROBLEM TO BE SOLVED BY THE INVENTION

As described above, the allocation of the radio resources is controlled based on the priority class of each call. In this way, QoS (Quality of Service) is differentiated depending on a user or service.

In general, however, the priority class of each call is set fixedly by the contract type or the like. For this reason, when a call having a high priority class involves a large amount of communication, a transmission rate of a call having a low priority class is lowered even when the call having the low priority class involves a small amount of communication, for example. In this way, fair services have not been provided to users.

The present invention has been made to solve the above-mentioned problem, and an objective thereof is to provide a radio communication system, a radio base station, and a radio communication method capable of providing fair services.

MEANS FOR SOLVING THE PROBLEM

A radio communication system according to a first feature provides a first call type to which radio resources are allocated in a time division manner. The radio communication system includes: a measurement unit configured to measure an actual usage record of the first call type during execution of the first call type after starting the first call type; and a setting unit configured to set a scheduling order of the first call type based on the actual usage record of the first call type, during execution of the first call type.

In the first feature, the setting unit sets the scheduling order of the first call type based on communication quality of the first call type during execution of the first call type.

In the first feature, the setting unit sets the scheduling order of the first call type based on an average transmission rate of the first call type during execution of the first call type.

In the first feature, the setting unit sets the scheduling order of the first call type based on a difference between a target transmission rate of the first call type and the average transmission rate of the first call type.

A radio base station according to a second feature is provided in a radio communication system providing a first call type to which radio resources are allocated in a time division manner. The radio base station includes: a measurement unit configured to measure an actual usage record of the first call type during execution of the first call type after starting the first call type; and a setting unit configured to set a scheduling order of the first call type based on the actual usage record of the first call type during execution of the first call type.

A radio communication method according to a third feature provides a first call type to which radio resources are allocated in a time division manner. The radio communication method includes: a step A of measuring an actual usage record of the first call type during execution of the first call type after starting the first call type; and a step B of setting a scheduling order of the first call type based on the actual usage record of the first call type during execution of the first call type.

EFFECTS OF THE INVENTION

According to the present invention, it is possible to provide a radio communication system, a radio base station, and a radio communication method capable of providing fair services.

BRIEF DESCRIPTION OF THE DRAWINGS

[Fig. 1] Fig. 1 is a view showing a radio communication system according to an embodiment.
[Fig. 2] Fig. 2 is a block diagram showing a radio base station 20 according to the embodiment.
[Fig. 3] Fig. 3 is a block diagram showing a baseband signal processing unit 220 according to the embodiment.
[Fig. 4] Fig. 4 is a block diagram showing a MAC processing unit 222 according to the embodiment.
[Fig. 5] Fig. 5 is a view showing a table for specifying a priority according to the embodiment.
[Fig. 6] Fig. 6 is a flowchart showing an operation of the radio base station 20 according to the embodiment.
[Fig. 7] Fig. 7 is a view showing a table for specifying a target transmission rate according to a modified example 1.

MODES FOR CARRYING OUT THE INVENTION

A radio communication system according to an embodiment of the present invention will be described below with reference to the drawings. Note that, in the following description of the drawings, same or similar reference numerals denote same or similar elements and portions.

In addition, it should be noted that the drawings are schematic and ratios of dimensions and the like are different from actual ones. Therefore, specific dimensions and the like should be determined in consideration of the following description. Moreover, the drawings also include portions having different dimensional relationships and ratios from each other.

[Summary of the Embodiment]

The embodiment relates to a radio communication, system providing a first call type to which radio resources are allocated in a time division manner. Here, the radio communication system may also provide a second call type to which the radio resources are allocated based on a transmission rate.

In the W-CDMA, the first call type is a call for a bearer of the HSDPA (High Speed Downlink Packet Access) or for a packet bearer of the LTE (Long Term Evolution) mode, for example. In the first call type, control of allocation of the radio resources is to control the order (scheduling priorities) of allocating the radio resources (such as time slots or frequencies) to the calls.

Here, the scheduling order is controlled by a radio base station (eNodeB). Note that, the radio base station controls the allocation of the radio resources by applying the priority class of the first call type regardless of the congestion situation of a radio section.

Here, a first call type having a high priority class has more opportunities to receive allocation of the radio resources while a first call type having a low priority class has less opportunity to receive allocation of the radio resources.

A core network 40 (such as MME: Mobility Management Entity) sets the priority class of the first call type and notifies a radio base station 20 of the priority class.

A second call type is a call for R99 (Release 99), for example. In the second call type, control of allocation of the radio resources is control of a transmission rate (an allocated transmission rate) which varies depending on the allocation of the radio resources.

Here, the allocated transmission rate is controlled by a radio network controller (RNC). It should be noted that the radio network controller employs a priority class of the second call type in the control of allocation of the radio resources depending on the congestion situation of the radio section.

Here, the radio resources sufficient for a high allocated transmission rate (such as 64 kbps) are allocated to a second call type having a high priority class while the radio resources sufficient for a low allocated transmission rate (such as 32 kbps) are allocated to a second call type having a low priority class.

The priority class of the second call type is set by the core network 40 (such as an exchange) and is notified from the core network 40 to the radio network controller.

Here, the radio communication system includes a measurement unit configured to measure an actual usage record of the first call type during execution of the first call type after starting the first call type, and a setting unit configured to set the scheduling order of the first call type based on the actual usage record of the first call type.

In the embodiment, the setting unit sets the scheduling order of the first call type based on the actual usage record of the first call type during execution of the first call type. For example, the scheduling order is raised as the actual usage record of the first call type becomes larger, whereas the scheduling order is lowered as the actual usage record of the first call type becomes smaller. Accordingly, it is possible to provide fair services.

[Embodiment]

(Radio Communication System)

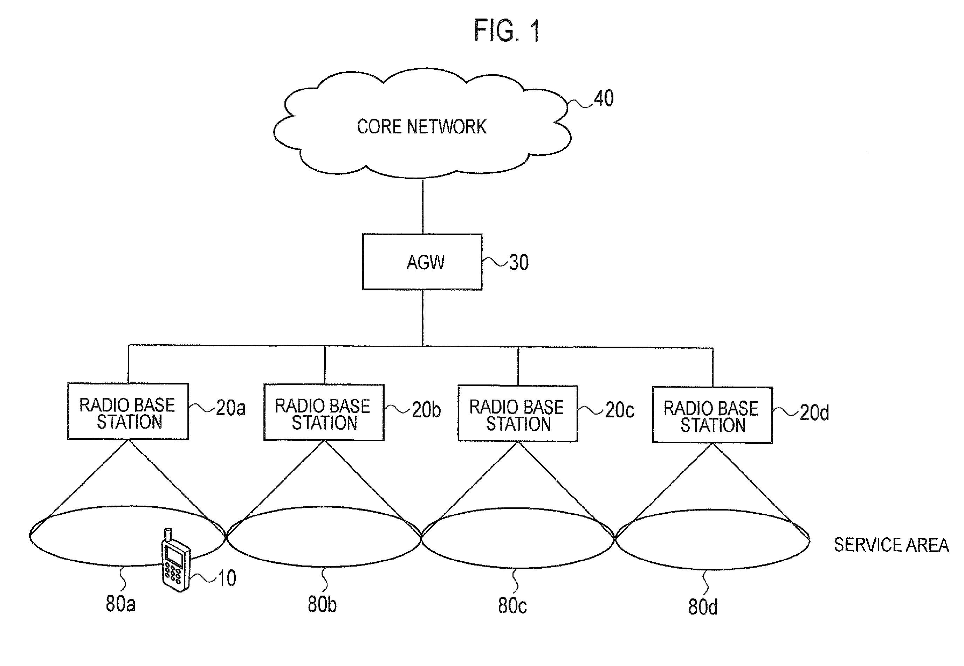

The radio communication system according to the embodiment will be described below with reference to the accompanying drawing. Fig. 1 is a view showing the radio communication system according to the embodiment. The radio communication system is a system employing the Evolved UTRA and UTRAN (LTE: Long Term Evolution or Super 3G). Therefore, it should be noted that a configuration used in R99 (such as a radio network controller) is omitted therein.

For example, in the radio communication system, the OFDMA (Orthogonal Frequency Division Multiple Access) is used as a radio access mode for a downlink. Meanwhile, the SC-FDMA (Single Carrier - Frequency Division Multiple Access) is used for an uplink.

In the OFDMA, a frequency band is divided into multiple narrow frequency bands (subcarriers) and data are transmitted by use of the multiple subcarriers. In the SC-FDMA, the frequency band is divided and the data are transmitted among multiple radio terminals by using different frequency bands. In this way, interferences among the multiple radio terminals are reduced in the SC-FDMA.

As shown in Fig. 1, the radio communication system provides services to a radio terminal 10. For example, the radio communication system provides the first call type to which the radio resources are allocated in a time division manner and the second call type to which the radio resources are allocated depending on the transmission rate. In the embodiment, the first call type is the call for the HSDPA or the HSUPA while the second call type is the call for R99. Moreover, the embodiment mainly explains a case in which the first call type and the second call type are packet switch calls.

Specifically, the radio communication system includes radio base stations 20, an access gateway 30, and the core network 40.

The radio terminal 10 is a terminal such as a mobile telephone, a PDA or a notebook PC. The radio terminal 10 performs communication with the radio base station 20 through a radio channel. The radio terminal 10 may also be referred to as UE (User Equipment).

Each of the radio base stations 20 manages a corresponding one of cells 80. Specifically, the radio base station 20 performs communication with the radio terminal 10 located in the cell 80 through the radio channel. The radio base station 20 may also be referred to as eNB (eNode B).

In the embodiment, radio base stations 20a to 20d are provided as the radio base station 20. Similarly, cells 80a to 80d are provided as the cell 80. The multiple cells 80 (the cells 80a to 80d) constitute service areas.

Here, note that, the radio base station 20 performs communication with multiple radio terminals 10. The radio base station 20 controls allocation of the radio resources for the first call type. Specifically, the radio base station 20 controls the order (scheduling priorities) of allocating the radio resources (such as the time slots or the frequencies) to the calls.

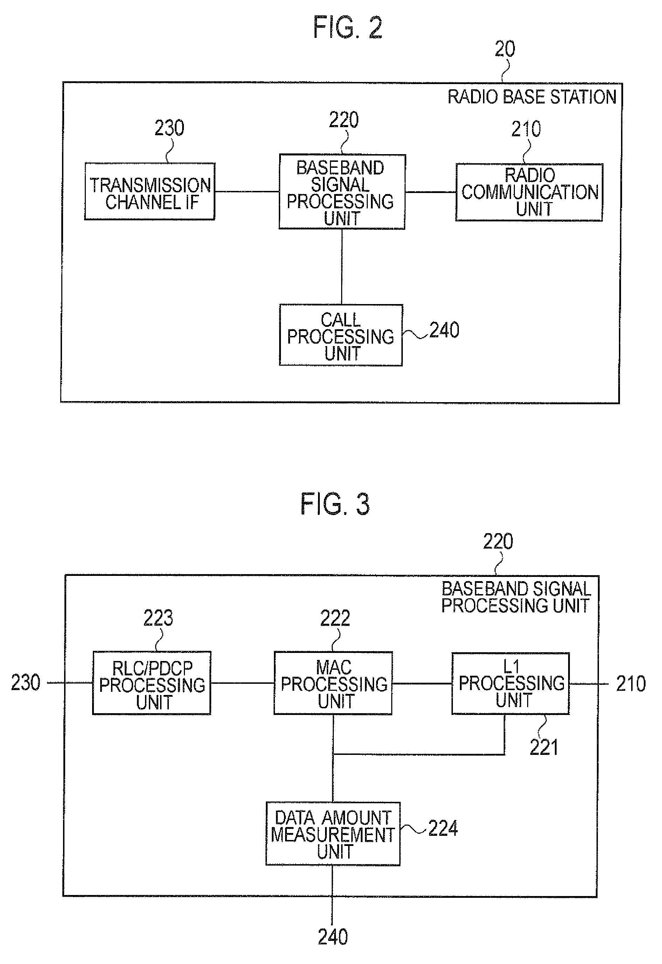

Details of the radio base station 20 will be described later (see Fig. 2).

The access gateway 30 is a device configured to manage the multiple radio base stations 20. That is, the access gateway 30 is an upper node of the radio base station 20.

The core network 40 includes the MME (Mobility Management Entity), for example. The core network 40 may also be referred to as EPC (Evolved Packet Core).

(Channel Configuration)

A channel configuration of the first call type according to the embodiment will be described below. Here, a channel configuration for the second call type will be omitted herein.

A downlink may be a physical downlink shared channel (PDSCH: Physical Downlink Shared Channel), a downlink control channel for the first call type, and the like. An uplink may be a physical uplink shared channel (PUSCH: Physical Uplink Shared Channel), an uplink control channel for the first call type, and the like.

In the downlink, information on a user or information on a transport format to be mapped on the physical downlink shared channel, information on a user or information on a transport format to be mapped on the physical uplink shared channel, transmission acknowledgment information on the physical uplink shared channel, and the like is transmitted to the radio terminal 10 through the downlink control channel for the first call type.

Meanwhile, in the downlink, the user data are transmitted through the physical downlink shared channel. For example, the user data includes IP packets for Web browsing, file transfer (FTP), voice packets (VoIP), and the like, control signals used for radio resource control (RRC: Radio Resource Control), and so forth. The user data are mapped on the physical downlink shared channel as a physical channel, and are mapped on a downlink shared channel (DL-SCH) as a transport channel.

In the uplink, quality information (CQI: Channel Quality Indicator) on the downlink, transmission acknowledgment information on the physical downlink shared channel, and the like is notified to the radio terminal 10 through the uplink control channel for the first call type. Here, the quality information (CQI) on the downlink is used for scheduling of the physical downlink shared channel and adaptive modulation and coding scheme (AMCS: Adaptive Modulation and Coding Scheme). The uplink control channel for the first call type includes a channel to be time-multiplexed with the physical uplink shared channel, and a channel to be frequency-multiplexed with the physical uplink shared channel.

Meanwhile, in the uplink, the user data are transmitted through the physical uplink shared channel. For example, the user data includes IP packets for web browsing, file transfer (FTP), voice packets (VoIP), and the like, control signals used for radio resource control (RRC: Radio Resource Control), and so forth. The user data are mapped on the physical uplink shared channel as a physical channel, and are mapped on an uplink shared channel (UL-SCH) as a transport channel.

(Radio Base Station)

The radio base station according to the embodiment will be described below with reference to the accompanying drawing. Fig. 2 is a block diagram showing the radio base station 20 according to the embodiment.

As shown in Fig. 2, the radio base station 20 includes a radio communication unit 210, a baseband signal processing unit 220, a transmission channel IF 230, and a call processing unit 240.

For the downlink, the radio communication unit 210 transmits a radio frequency signal to the radio terminal 10. Here, the radio communication unit 210 converts a baseband signal to be transmitted to the radio terminal 10 into the radio frequency signal, and then amplifies the radio frequency signal.

For the uplink, the radio communication unit 210 receives the radio frequency signal from the radio terminal 10. Here, the radio communication unit 210 amplifies the radio frequency signal received from the radio terminal 10, and then converts the radio frequency signal into the baseband signal.

The baseband signal processing unit 220 performs processing for a L1 (Layer 1), processing for a PDCP layer (Packet Data Convergence Protocol Layer), processing for an RLC layer (Radio Link Control Layer), and processing for a MAC layer (Media Access Control Layer).

For example, in the downlink, retransmission control processing (such as HARQ: Hybrid Automatic Repeat reQuest), scheduling processing, transmission format selection processing, channel coding processing, IFFT processing, and the like are performed as the processing for the layers described above.

For example, in the uplink, FFT processing, IDFT processing, channel decoding processing, error correction decoding processing, retransmission control processing (such as HQRQ), and the like are performed as the processing for the layers described above.

Note that, details of the baseband signal processing unit 220 will be described later (see Fig. 3).

The transmission channel IF 230 is an interface for performing communication with the access gateway 30. For example, the transmission channel IF 230 acquires a priority class of the first call type, which is set by the core network 40, from the core network 40 through the access gateway 30.

The call processing unit 240 performs call processing such as establishment or release of the communication channel, state management of the radio base stations 20, management of the radio resources for the radio base stations 20, and the like.

(Baseband Signal Processing Unit)

The baseband signal processing unit according to the embodiment will be described below with reference to the accompanying drawing. Fig. 3 is a block diagram showing the baseband signal processing unit 220 according to the embodiment.

As shown in Fig. 3, the baseband signal processing unit 220 includes an L1 processing unit 221, a MAC processing unit 222, an RLC/PDCP processing unit 223, and a data amount measurement unit 224.

The L1 processing unit 221 performs the processing for the layer 1. Specifically, the L1 processing unit 221 performs the channel coding processing, the IFFT processing, and the like for downlink data. The L1 processing unit 221 performs the FFT processing, the IDFT processing, the channel decoding processing, and the like for uplink data.

The L1 processing unit 221 transmits control information on the downlink shared channel (such as Downlink Scheduling Information) and control information on the uplink shared channel (such as Uplink Scheduling Information) to the radio terminal 10. Meanwhile, the L1 processing unit 221 transmits uplink transmission acknowledgment information to the radio terminal 10.

The L1 processing unit 221 receives the quality information (CQI) on the downlink and downlink transmission acknowledgment information from the radio terminal 10. The quality information (CQI) on the downlink is notified to the MAC processing unit 222.

The L1 processing unit 221 judges a state of synchronization of the uplink based on an uplink reference signal and the quality information on the downlink received from the radio terminal 10. The state of synchronization of the uplink is notified to the MAC processing unit 222.

The L1 processing unit 221 may estimate uplink reception timing based on the uplink reference signal and the quality information on the downlink received from the radio terminal 10.

The L1 processing unit 221 may be configured to notify the data amount measurement unit 224 of an amount of the radio resources used for downlink data transmission during execution of the first call type. The L1 processing unit 221 may be configured to notify the data amount measurement unit 224 of an amount of the radio resources used for uplink data transmission during execution of the first call type.

Here, the radio resources may be frequency resources, time resources, code resources or power resources, for example. The frequency resources may also be defined as the number of resource blocks.

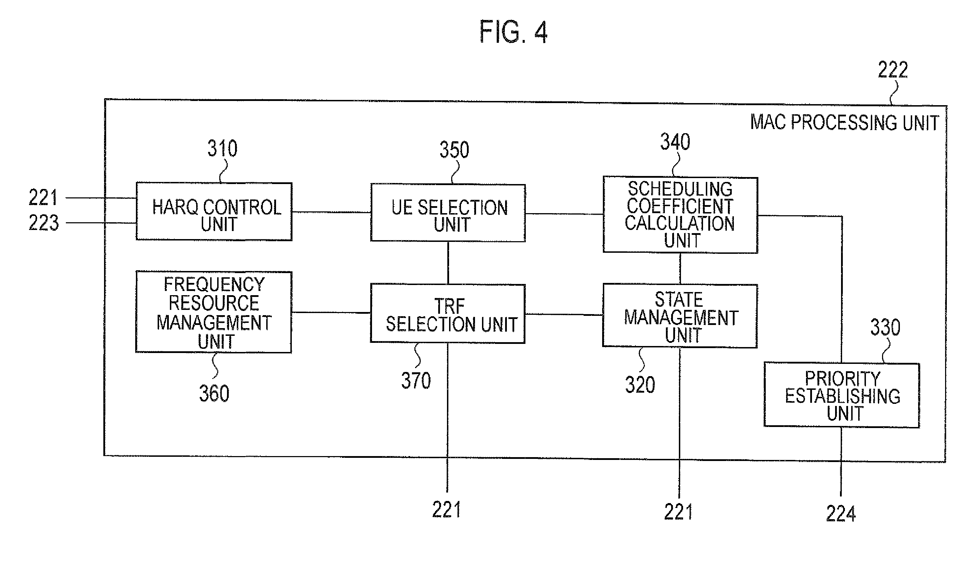

The MAC processing unit 222 performs the processing for the MAC layer. Specifically, the MAC processing unit 222 performs retransmission control (such as the HARQ) processing, the scheduling processing, and the transmission format selection processing in the MAC layer. Note that, details of the MAC processing unit 222 will be described later (see Fig. 4).

The RLC/PDCP processing unit 223 performs the processing for the RLC layer and the processing for the PDCP layer. Specifically, the RLC/PDCP processing unit 223 performs transmission processing for the downlink data. For example, the RLC/PDCP processing unit 223 performs division and integration of packets in the PDCP layer as well as the retransmission control processing in the RLC layer for the downlink data. The RLC/PDCP processing unit 223 performs reception processing for the uplink data. For example, the RLC/PDCP processing unit 223 performs division and integration of packets in the PDCP layer as well as the retransmission control processing in the RLC layer for the uplink data.

The RLC/PDCP processing unit 223 may be configured to notify the data amount measurement unit 224 of an amount of downlink transmission data in the RLC layer during execution of the first call type. The RLC/PDCP processing unit 223 may be configured to notify the data amount measurement unit 224 of an amount of uplink reception data in the RLC layer during execution of the first call type.

Alternatively, the RLC/PDCP processing unit 223 may be configured to notify the data amount measurement unit 224 of an amount of downlink transmission data in the PDCP layer during execution of the first call type. The RLC/PDCP processing unit 223 may be configured to notify the data amount measurement unit 224 of an amount of uplink reception data in the PDCP layer during execution of the first call type.

Here, the RLC/PDCP processing unit 223 may be configured to notify the data amount measurement unit 224 of the amounts of the transmission data (or the reception data) in both of the RLC layer and the PDCP layer.

The data amount measurement unit 224 measures an actual usage record of the first call type during execution of the first call type after starting the first call type.

For example, any of the following actual usage records may be used as the actual usage record of the first call type.

(1) An accumulated value of the amount of the transmission data in the downlink during execution of the first call type.
(2) An accumulated value of the amount of the reception data in the uplink during execution of the first call type.
(3) An accumulated value of the amounts of the transmission data in the downlink and the uplink during execution of the first call type.
(4) An accumulated value of the amount of the radio resources used for data transmission in the downlink during execution of the first call type.
(5) An accumulated value of the amount of the radio resources used for data reception in the uplink during execution of the first call type.
(6) An accumulated value of the amount of radio resources used for the data transmission and data reception in the uplink during execution of the first call type.

The actual usage records shown in (1) to (6) may be measured depending on each radio terminal 10. The actual usage records shown in (1) to (6) may be measured depending on each service type. The actual usage records shown in (1) to (6) may be measured depending on each contract type or each priority class. The actual usage records shown in (1) to (6) may be measured depending on each type of a logical channel (Logical Channel) or on each type of a radio bearer (Radio Bearer) established between the radio terminal 10 and the radio base station 20.

The amount of the transmission data and the amount of the reception data may be amounts of data on the RLC layer. The amount of the transmission data and the amount of the reception data may be amounts of data on the PDCP layer.

The amount of the radio resources may be the frequency resources, the time resources, the code resources or the power resources. The amount of the radio resources may be a combination of two or more of the frequency resources, the time resources, the code resources, and the power resources. Here, the frequency resources may be defined as the number of resource blocks.

The service type may be the type such as VoIP (Voice over Internet Protocol), a voice service, a streaming service or FTP (File Transfer Protocol), for example.

The contract type is the type of a contract subscribed by the user of the radio terminal 10. The contract type may be the type such as a low class contract, a high class contract, a flat-rate contract or a pay as you go contract, for example.

The priority class is the class for categorizing transmission priorities in the downlink and the uplink. The priority class may be set based on the contract type, for example. Here, a call having a high priority class is transmitted in preference to a call having a low priority class. The priority class is linked with the logical channel and may also be referred to as a logical channel priority (Logical Channel Priority). Meanwhile, the priority class may also be referred to as Priority Class.

The logical channel type is the type such as a DCCH (Dedicated Control Channel) or a DTCH (Dedicated Traffic Channel). The DCCH and the DTCH may also be defined by using more detailed multiple logical channels.

The radio bearer type is the type of the radio bearer for transmitting the data. The radio bearer is linked one to one with the logical channel. Therefore, the radio bearer can be considered as the same as the logical channel.

(MAC Processing Unit)

The MAC processing unit according to the embodiment will be described below with reference to the accompanying drawing. Fig. 4 is a block diagram showing the MAC processing unit 222 according to the embodiment.

As shown in Fig. 4, the MAC processing unit 222 includes a HARQ control unit 310, a state management unit 320, a priority setting unit 330, a scheduling coefficient calculation unit 340, a UE selection unit 350, a frequency resource management unit 360, and a TRF selection unit 370.

The HARQ control unit 310 performs retransmission control in the MAC layer. Specifically, the HARQ control unit 310 combines a block initially transmitted from the radio terminal 10 (hereinafter a transmitted block) with a block retransmitted from the radio terminal 10 (hereinafter a retransmitted block).

Here, the HARQ control unit 310 may be provided for each radio terminal 10 (UE) or for each logical channel. The HARQ control unit 310 may also be provided in common to multiple radio terminals 10 (UE).

The state management unit 320 manages a state of each radio terminal 10 (UE). The state management unit 320 manages a state of a HARQ entity, a state of mobility of the UE, a DRX state (an intermittent reception cycle), a state of uplink synchronization, whether or not to employ persistent scheduling, presence or absence of transmission of a MAC control block, a state of downlink transmission, a buffer state, and the like depending on each UE.

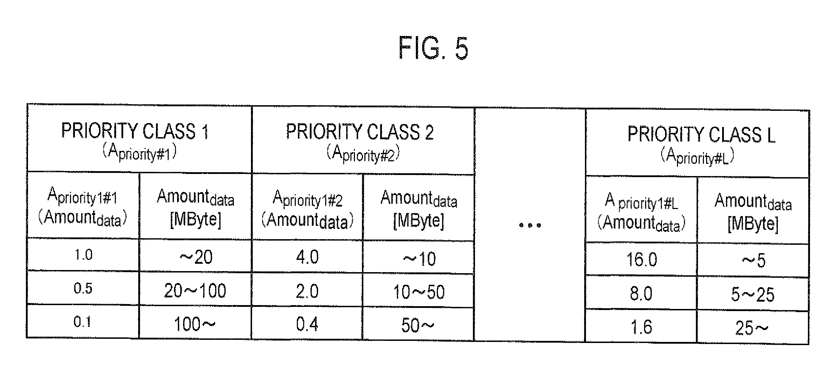

The priority setting unit 330 sets the priority based on the actual usage record of the first call type measured by the data amount measurement unit 224. For example, the priority setting unit 330 makes reference to a table shown in Fig. 5 and sets a priority ($A_{priority\#n}$ ($Amount_{data}$)). On the table shown in Fig. 5, the priority ($A_{priotity\#n}$ ($Amount_{data}$)) and the actual usage record ($Amount_{data}$) are linked with each priority class ($A_{priority\#n}$). As shown in Fig. 5, the priority class ($A_{priority\#n}$ ($Amount_{data}$)) becomes higher as the actual usage record ($Amount_{data}$) becomes smaller. In the meantime, the priority ($A_{priority\#n}$ ($Amount_{data}$)) becomes higher as the priority class ($A_{priority\#n}$) becomes higher.

The scheduling coefficient calculation unit 340 sets the scheduling order of the first call type based on the actual usage record of the first call type. Specifically, the scheduling coefficient calculation unit 340 calculates a scheduling coefficient $C_n$ of a radio terminal 10n (UEn) in accordance with the following formula.

[Formula 1]

$$C_n = A_{priority\#n}(Amount_{data}) \times \frac{Q_n}{\overline{R_n}}$$

$A_{priority\#n}$ ($Amount_{data}$): the priority of the radio terminal 10n (UEn)
$A_{priority\#n}$: the priority class of the radio terminal 10n (UEn)
$Amount_{data}$: the actual usage record of the radio terminal 10n (UEn)
$Q_n$: the communication quality of the radio terminal 10n (UEn)
$\overline{R_n}$ : an average transmission rate of the radio terminal 10n (UEn)

As described above, the priority of the radio terminal 10n (UEn) is specified by the priority class and the actual usage record of use of the table shown in Fig. 5.

The communication quality of the radio terminal 10n (UEn) is obtained as described below. The communication quality of the downlink is calculated based on the CQI (Channel Quality Indicator) to be notified from the radio terminal 10n to the radio base station 20, for example. The communication quality of the uplink is calculated based on a SIR (Signal to Interference Ratio) of the uplink reference signal to be received from the radio terminal 10n (UEn), for example.

Here, the communication quality of the uplink may be calculated based on a power offset value between the uplink reference signal and the uplink shared channel. In this case, the communication quality of the uplink shared channel is estimated based on the communication quality of the reference signal and on the power offset value.

The average transmission rate of the radio terminal 10n (UEn) is either an average value of a downlink transmission rate to be transmitted to the radio terminal 10n or an average value of an uplink transmission rate to be received from the radio terminal 10n. In calculation of the average transmission rate, a time period for which the transmission data are present on a transmission buffer may be used as a denominator, for example. Alternatively, in calculation of the average transmission rate, a total time period of the time period for which the transmission data are present on the transmission buffer and the time period for which the transmission data are present on the transmission buffer, i.e., a time period for which the first call type is established may be used as the denominator.

Here, the scheduling coefficient $C_n$ may be calculated based on each radio terminal 10. In this case, the actual usage record measured based on each radio terminal 10 is used as the actual usage record.

The scheduling coefficient $C_n$ may be calculated based on each service type. In this case, the actual usage record measured based on each service type is used as the actual usage record.

The scheduling coefficient $C_n$ may be calculated based on each contract type or each priority class. In this case, the actual usage record measured based on each contract type or each priority class is used as the actual usage record.

The scheduling coefficient $C_n$ may be calculated based on each logical channel or each radio bearer. In this case, the actual usage record measured based on each logical channel or each radio bearer is used as the actual usage record.

The UE selection unit 350 selects some of the radio terminals 10 (UE) to which the radio resources are to be allocated for the first call types under dynamic scheduling. Specifically, the UE selection unit 350 selects some of the radio terminals 10 (UE) to which the radio resources are to be allocated based on the scheduling coefficients $C_n$ of the first call types. The UE selection unit 350 notifies the TRF selection unit 370 of the number of the radio terminals 10 (UE) to which the radio resources are to be allocated.

In this way, the UE selection unit 350 controls the order of allocating the radio resources (scheduling order) to the first call types for the radio terminals 10 (UE) based on the scheduling coefficients $C_n$ of the first call types.

Here, a first call type having a larger scheduling coefficient $C_n$ has more opportunities to receive allocation of the radio resources (such as the time slots and the frequencies) while a first call type having a smaller scheduling coefficient $C_n$ has less opportunities to receive allocation of the radio resources (such as the time slots or the frequencies). That is, the first call type having the large scheduling coefficient $C_n$ receives a higher scheduling order whereas the first call type having the small scheduling coefficient $C_n$ receives a lower scheduling order.

Here, regarding the downlink, the UE selection unit 350 may select the radio terminals 10 (UE) based on the amount of data to be transmitted to the radio terminals 10 (UE) in addition to the scheduling coefficient $C_n$. Regarding the uplink, the UE selection unit 350 may select the radio terminals 10 (UE) based on the amount of data to be received from the radio terminals 10 (UE) in addition to the scheduling coefficient $C_n$.

The amount of data to be transmitted to the radio terminals 10 (UE) is acquired based on buffer amounts of buffers provided on the radio base stations 20. The amount of data to be received from the radio terminals 10 (UE) is estimated based on buffer amounts (Buffer Status Report) to be reported from the radio terminals 10.

The frequency resource management unit 360 manages the frequency resources. Specifically, the frequency resource management unit 360 monitors the remaining frequency resources available for the downlink shared channel which employs the dynamic scheduling. The frequency resource management unit 360 notifies the TRF selection unit 370 of the remaining frequency resources.

The TRF selection unit 370 determines the transmission formation of the downlink shared channel (DL-SCH) for the first call type under the dynamic scheduling. Meanwhile, the TRF selection unit 370 allocates the radio resources (such as the time slots or the frequencies) based on the transmission formation of the downlink shared channel (DL-SCH). Specifically, the TRF selection unit 370 allocates the radio resources based on the number of the ratio terminals 10 (UE) notified from the UE selection unit 350 and on the remaining frequency resources notified from the frequency resource management unit 360.

(Operation of Radio Base Station)

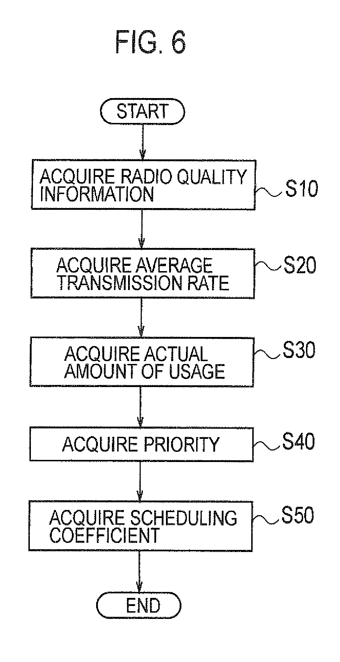

An operation of the radio base station according to the embodiment will be described below with reference to the accompanying drawing. Fig. 6 is a flowchart showing the operation of the radio base station 20 according to the embodiment.

As shown in Fig. 6, the radio base station 20 acquires the communication quality in step 10. The downlink communication quality is calculated based on the CQI, for example. The uplink communication quality is calculated based on the SIR of the reference signal, for example.

In step 20, the radio base station 20 acquires the average transmission rate of the radio terminals 10 (UE). The average transmission rate is the average value of the downlink transmission rate to be transmitted to the radio terminals 10 or the average value of the uplink transmission rate to be received from the radio terminals 10.

In step 30, the radio base station 20 acquires the actual usage record of the first call type. For example, any of the following actual usage records may be used as the actual usage record of the first call type.

(1) An accumulated value of the amount of the transmission data in the downlink during execution of the first call type.
(2) An accumulated value of the amount of the reception data in the uplink during execution of the first call type.
(3) An accumulated value of the amounts of the transmission data in the downlink and the uplink during execution of the first call type.
(4) An accumulated value of the amount of the radio resources used for data transmission in the downlink during execution of the first call type.
(5) An accumulated value of the amount of the radio resources used for data reception in the uplink during execution of the first call type.
(6) An accumulated value of the amount of radio resources used for the data transmission and data reception in the uplink during execution of the first call type.

In step 40, the radio base station 20 acquires the priority. For example, the radio base station 20 makes reference to the table shown in Fig. 5 and specifies the priority ($A_{priority\#n}$ (Amount$_{data}$)) based on the actual usage record (Amount$_{data}$) and the priority class ($A_{priority\#n}$).

In step 50, the radio base station 20 acquires the scheduling coefficient $C_n$ of the radio terminal 10n (UEn). For example, the radio base station 20 calculates a scheduling coefficient $C_n$ of a radio terminal 10n (UEn) in accordance with the following formula.

[Formula 2]

$$C_n = A_{priority\#n}(Amount_{data}) \times \frac{Q_n}{R_n}$$

$A_{priority\#n}$ (Amount$_{data}$): the priority of the radio terminal 10n (UEn)

$A_{priority\#n}$: the priority class of the radio terminal 10n (UEn)

$Amount_{data}$: the actual usage record of the radio terminal 10n (UEn)

$Q_n$: the communication quality of the radio terminal 10n (UEn)

$\overline{R_n}$: an average transmission rate of the radio terminal 10n (UEn)

(Advantageous Effect)

According to the embodiment, the scheduling coefficient calculation unit 340 calculates the scheduling coefficient $C_n$ of the first call type based on the actual usage record of the first call type during execution of the first call type. The UE selection unit 350 controls the order of allocating the radio resources (scheduling order) to the first call type for the radio terminals 10 (UE) based on the scheduling coefficient $C_n$ of the first call type.

Here, in the embodiment, the scheduling order is raised as the actual usage record of the first call type becomes larger, whereas the scheduling order is lowered as the actual usage record of the first call type becomes smaller. Accordingly, it is possible to provide fair services.

In the embodiment, the scheduling coefficient $C_n$ is calculated based on the priority ($A_{priority\#n}$ ($Amount_{data}$)), and the priority ($A_{priority\#n}$ ($Amount_{data}$)) is specified based on the actual usage record ($Amount_{data}$). Accordingly, it should be noted that the scheduling coefficient $C_n$ is calculated based on the actual usage record ($Amount_{data}$).

In the embodiment, the priority ($A_{priority\#n}$ ($Amount_{data}$)) is specified based on the priority class ($A_{priority\#n}$). Therefore, it should be noted that the priority class ($A_{priority\#n}$) is also considered in calculating the scheduling coefficient $C_n$.

[Modified Example 1]

A modified example 1 of the embodiment will be described below with reference to the accompanying drawing. A difference from the first embodiment will be mainly described below.

Specifically, in the modified example 1, the scheduling coefficient $C_n$ is calculated based on a target transmission rate of the radio terminal 10n (UEn) instead of the priority of the radio terminal 10n (UEn). To be specific, the radio base station 20 (scheduling coefficient calculation unit 340) calculates a scheduling coefficient $C_n$ of a radio terminal 10n (UEn) in accordance with the following formula.

[Formula 3]

$$C_n = \frac{Q_n}{\overline{R_n} - R_{target,Priority\#n}(Amount_{data})}$$

$Amount_{data}$: the actual usage record of the radio terminal 10n (UEn)

$Q_n$: the communication quality of the radio terminal 10n (UEn)

$\overline{R_n}$: an average transmission rate of the radio terminal 10n (UEn)

$R_{target,Priority\#n}$: the target transmission rate of the radio terminal 10n (UEn)

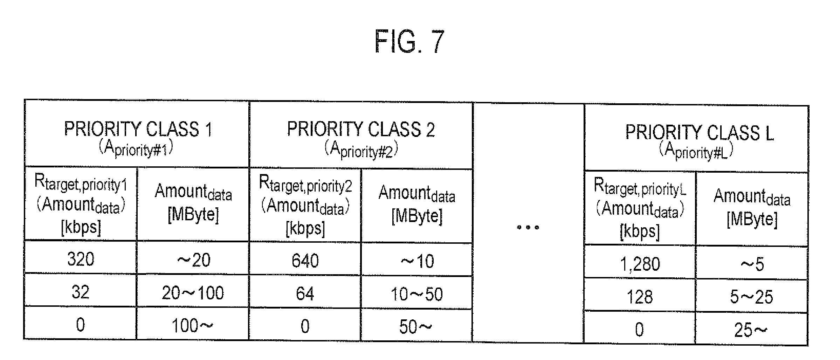

The target transmission rate of the radio terminal 10n (UEn) is specified by the priority class and the actual usage record of use of the table shown in Fig. 7, for example. On the table shown in Fig. 7, the target transmission rate ($R_{target,Priority\#n}$ ($Amount_{data}$)) and the actual usage record ($Amount_{data}$) are linked with each priority class ($A_{priority\#n}$). As shown in Fig. 7, the target transmission rate ($R_{target,Priority\#n}$ ($Amount_{data}$)) becomes higher as the actual usage record ($Amount_{data}$) becomes smaller. In the meantime, the target transmission rate ($R_{target,Priority\#n}$ ($Amount_{data}$)) becomes higher as the priority class ($A_{priority\#n}$) becomes higher.

(Advantageous Effect)

According to the modified example 1, the scheduling coefficient calculation unit 340 calculates the scheduling coefficient $C_n$ of the first call type based on the actual usage record of the first call type during execution of the first call type, in the same manner as the embodiment. The UE selection unit 350 controls the order (scheduling priorities) of allocating the radio resources to the first call types for the radio terminals 10 (UE) based on the scheduling coefficients $C_n$ of the first call types.

Here, in the modified example. 1, the scheduling order is raised as the actual usage record of the first call type becomes larger, whereas the scheduling order is lowered as the actual usage record of the first call type becomes smaller, in the same manner as the embodiment. Accordingly, it is possible to provide fair services.

In the embodiment, the scheduling coefficient $C_n$ is calculated based on the target transmission rate ($R_{target,Priority\#n}$ ($Amount_{data}$)), and the target transmission rate ($R_{target,Priority\#n}$ ($Amount_{data}$)) is specified based on the actual usage record ($Amount_{data}$). Accordingly, it should be noted that the scheduling coefficient $C_n$ is calculated based on the actual usage record ($Amount_{data}$).

In the embodiment, the target transmission rate ($R_{target,Priority\#n}$ ($Amount_{data}$)) is specified based on the priority class ($A_{priority\#n}$). Therefore, it should be noted that the priority class ($A_{priority\#n}$) is also considered in calculating the scheduling coefficient $C_n$.

[Modified Example 2]

A modified example 2 of the embodiment will be described below with reference to the accompanying drawing. A difference from the first embodiment will be mainly described below.

Specifically, in the modified example 2, the scheduling coefficient $C_n$ is calculated based on a target transmission rate of the radio terminal 10n (UEn) in addition to the priority of the radio terminal 10n (UEn). To be specific, the radio base station 20 (scheduling coefficient calculation unit 340) calculates a scheduling coefficient $C_n$ of a radio terminal 10n (UEn) in accordance with the following formula.

$$[\text{Formula 4}]$$

$$C_n = A_{priority\#n}(Amount_{data}) \times \frac{Q_n}{\overline{R_n} - R_{target,Priority\#n}(Amount_{data})}$$

$A_{priority\#n}(Amount_{data})$: the priority of the radio terminal 10n (UEn)
$A_{priority\#n}$: the priority class of the radio terminal 10n (UEn)
$Amount_{data}$: the actual usage record of the radio terminal 10n (UEn)
$Q_n$: the communication quality of the radio terminal 10n (UEn)
$\overline{R_n}$ : an average transmission rate of the radio terminal 10n (UEn)
$R_{target,Priority\#n}$: the target transmission rate of the radio terminal 10n (UEn)

(Advantageous Effect)

According to the modified example 2, the scheduling coefficient calculation unit 340 calculates the scheduling coefficient $C_n$ of the first call type based on the actual usage record of the first call type during execution of the first call type, in the same manner as the embodiment and the modified example 1. Therefore, it is obvious that the modified example 2 produces similar effects to those of the embodiment and the modified example 1.

[Other Embodiments]

As described above, the details of the present invention have been disclosed by using the embodiment of the present invention. However, it should not be understood that the description and drawings which constitute part of this disclosure limit the present invention. From this disclosure, various alternative embodiments, examples, and operation techniques will be easily found by those skilled in the art.

The system employing the LTE has been described as the example of the radio communication system in the embodiment. However, the embodiment is not limited only to this configuration. For example, the radio communication system may be a system employing the R99.

In the embodiment, the scheduling order of the first call type is controlled based on the actual usage record of the first call type. However, the embodiment is not limited only to this configuration. Specifically, the scheduling order of the second call type may be controlled based on the actual usage record of the second call type.

Although it is not particularly stated in the modified example 1 and the modified example 2, the scheduling coefficient $C_n$ may be configured to be set to a maximum for the first call type having the average transmission rate which is lower than the target transmission rate. In other words, the first call type having the average transmission rate lower than the target transmission rate may be given the top priority.

Note that the entire content of Japanese Patent Application No. 2009-034217 (filed on February 17, 2009) is incorporated herein by reference.

INDUSTRIAL APPLICABILITY

As described above, a radio communication system, a radio base station, and a radio communication method according to the present invention are capable of providing fair services and are therefore useful.

**Claims**

1. A radio communication system providing a first call type to which radio resources are allocated in a time division manner, comprising:

   a measurement unit configured to measure an actual usage record of the first call type during execution of the first call type after starting the first call type; and
   a setting unit configured to set a scheduling order of the first call type based on the actual usage record of the first call type, during execution of the first call type.

2. The radio communication system according to claim 1, wherein the setting unit sets the scheduling order of the first call type based on communication quality of the first call type during execution of the first call type.

3. The radio communication system according to claim 1, wherein the setting unit sets the scheduling order of the first call type based on an average transmission rate of the first call type during execution of the first call type.

4. The radio communication system according to claim 3, wherein the setting unit sets the scheduling order of the first call type based on a difference between a target transmission rate of the first call type and the average transmission rate of the first call type.

5. A radio base station provided in a radio communication system providing a first call type to which radio resources are allocated in a time division manner, comprising:

   a measurement unit configured to measure an actual usage record of the first call type during execution of the first call type after starting the first call type; and
   a setting unit configured to set a scheduling order of the first call type based on the actual usage record of the first call type during execution of the first call type.

6. A radio communication method providing a first call type to which radio resources are allocated in a time division manner, comprising:

   a step A of measuring an actual usage record of the first call type during execution of the first call type after starting the first call type; and
   a step B of setting a scheduling order of the first call type based on the actual usage record of the first call type during execution of the first call type.

# FIG. 1

CORE NETWORK ~40

AGW ~30

RADIO BASE STATION ~20a

RADIO BASE STATION ~20b

RADIO BASE STATION ~20c

RADIO BASE STATION ~20d

SERVICE AREA

80a    80b    80c    80d

10

EP 2 400 809 A1

## FIG. 2

## FIG. 3

FIG. 4

MAC PROCESSING UNIT — 222

310 HARQ CONTROL UNIT

350 UE SELECTION UNIT

340 SCHEDULING COEFFICIENT CALCULATION UNIT

360 FREQUENCY RESOURCE MANAGEMENT UNIT

370 TRF SELECTION UNIT

320 STATE MANAGEMENT UNIT

330 PRIORITY ESTABLISHING UNIT

221
223
221
221
224

# FIG. 5

EP 2 400 809 A1

| PRIORITY CLASS 1 ($A_{priority\#1}$) | | PRIORITY CLASS 2 ($A_{priority\#2}$) | | | PRIORITY CLASS L ($A_{priority\#L}$) | |
|---|---|---|---|---|---|---|
| $A_{priority1\#1}$ ($Amount_{data}$) | $Amount_{data}$ [MByte] | $A_{priority1\#2}$ ($Amount_{data}$) | $Amount_{data}$ [MByte] | ... | $A_{priority1\#L}$ ($Amount_{data}$) | $Amount_{data}$ [MByte] |
| 1.0 | ~20 | 4.0 | ~10 | | 16.0 | ~5 |
| 0.5 | 20~100 | 2.0 | 10~50 | | 8.0 | 5~25 |
| 0.1 | 100~ | 0.4 | 50~ | | 1.6 | 25~ |

# FIG. 6

```
        ┌─────────┐
        │  START  │
        └─────────┘
             │
             ▼
┌──────────────────────────┐
│ ACQUIRE RADIO QUALITY    │───S10
│ INFORMATION              │
└──────────────────────────┘
             │
             ▼
┌──────────────────────────┐
│ ACQUIRE AVERAGE          │───S20
│ TRANSMISSION RATE        │
└──────────────────────────┘
             │
             ▼
┌──────────────────────────┐
│ ACQUIRE ACTUAL           │───S30
│ AMOUNT OF USAGE          │
└──────────────────────────┘
             │
             ▼
┌──────────────────────────┐
│ ACQUIRE PRIORITY         │───S40
└──────────────────────────┘
             │
             ▼
┌──────────────────────────┐
│ ACQUIRE SCHEDULING       │───S50
│ COEFFICIENT              │
└──────────────────────────┘
             │
             ▼
        ┌─────────┐
        │   END   │
        └─────────┘
```

EP 2 400 809 A1

## FIG. 7

| PRIORITY CLASS 1 ($A_{priority\#1}$) | | PRIORITY CLASS 2 ($A_{priority\#2}$) | | ... | PRIORITY CLASS L ($A_{priority\#L}$) | |
|---|---|---|---|---|---|---|
| $R_{target,priority1}$ ($Amount_{data}$) [kbps] | $Amount_{data}$ [MByte] | $R_{target,priority2}$ ($Amount_{data}$) [kbps] | $Amount_{data}$ [MByte] | | $R_{target,priorityL}$ ($Amount_{data}$) [kbps] | $Amount_{data}$ [MByte] |
| 320 | ~20 | 640 | ~10 | ... | 1,280 | ~5 |
| 32 | 20~100 | 64 | 10~50 | | 128 | 5~25 |
| 0 | 100~ | 0 | 50~ | | 0 | 25~ |

<div align="center">

**INTERNATIONAL SEARCH REPORT**

</div>

| International application No. |
|---|
| PCT/JP2010/052138 |

A. CLASSIFICATION OF SUBJECT MATTER
*H04W72/12*(2009.01)i, *H04W72/10*(2009.01)i

According to International Patent Classification (IPC) or to both national classification and IPC

B. FIELDS SEARCHED

Minimum documentation searched (classification system followed by classification symbols)
H04B7/24-7/26, H04W4/00-99/00

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-147275 A  (Matsushita Electric Industrial Co., Ltd.),<br>20 May 2004 (20.05.2004),<br>paragraphs [0084] to [0091]; fig. 5, 6<br>& US 2004/0258070 A1    & EP 1443719 A1<br>& WO 2004/021651 A1    & CN 1596527 A | 1,2,5,6<br>3,4 |
| Y<br>A | JP 2005-86216 A  (NTT Docomo Inc.),<br>31 March 2005 (31.03.2005),<br>paragraph [0060]; fig. 5<br>& US 2005/0063392 A1    & EP 1513300 A2<br>& CN 1592483 A | 3,4<br>1,2,5,6 |

☒ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>05 April, 2010 (05.04.10) | Date of mailing of the international search report<br>13 April, 2010 (13.04.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2010/052138 |

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2006/129698 A1  (NEC Corp.), 07 December 2006 (07.12.2006), entire text; all drawings & EP 1887828 A1          & KR 10-2008-0012889 A & CN 101189902 A | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009034217 A